Europäisches Patentamt

European Patent Office

Office européen des brevets

(11) Veröffentlichungsnummer: **0 318 809**
**A1**

# (12) EUROPÄISCHE PATENTANMELDUNG

(21) Anmeldenummer: 88119455.9

(22) Anmeldetag: 23.11.88

(51) Int. Cl.⁴: **C01B 3/34 , F23D 11/38**

(30) Priorität: 30.11.87 DE 3740512

(43) Veröffentlichungstag der Anmeldung:
**07.06.89 Patentblatt 89/23**

(84) Benannte Vertragsstaaten:
**DE FR GB NL**

(71) Anmelder: **Union Rheinische Braunkohlen Kraftstoff Aktiengesellschaft**
**Ludwigshafener Strasse o. Nr. Postfach 1663**
**D-5047 Wesseling(DE)**

(72) Erfinder: **Hansen, Karl, Dipl.-Ing.**
**Hordorfer Weg 28**
**D-5303 Bornheim(DE)**

(54) **Verbesserte Öllanzen für Vergasungsreaktoren.**

(57) Die vorliegende Erfindung betrifft verbesserte Öllanzen in Vergasungsreaktoren durch Änderungen am unteren Teil der Öllanze und der Zerstäuberdüse.

EP 0 318 809 A1

## Verbesserte Öllanzen für Vergasungsreaktoren

Die vorliegende Erfindung betrifft verbesserte Öllanzen in Vergasungsreaktoren durch Änderungen am unteren Teil der Öllanze und der Zerstäuberdüse.

Die Vergasung von Kohlenwasserstoffen
$$- CH_2 - + H_2O \rightleftharpoons CO + 2 H_2$$
dient bekanntlich zur Erzeugung von Synthesegas. Obgleich auch andere Kohlenstoff enthaltende Materialien insbesondere Kohle selbst, aber auch beispielsweise Holz oder Torf als Rohstoffe für Synthesegas geeignet sind, so ist die Vergasung von Kohlenwasserstoffen das derzeit wichtigste Verfahren. Grundsätzlich können entweder sehr reine Kohlenwasserstoffe, wie beispielsweise Methan und andere Kohlenwasserstoffgase oder Benzinschnitte, die jeweils unter 1 ppm entschwefelt sind, über Nickelkatalysatoren vergast werden. Ein bekanntes Verfahren ist das ICI-Steam-Reforming Verfahren. Oder es werden verunreinigte Rückstandsöle bei sehr hohen Temperaturen von etwa 1000-1600° C, autotherm durch gleichzeitige Zuführung vom Dampf und Sauerstoff zu Synthesegas umgesetzt. Bekannte Verfahren sind die Shell-Vergasung und Texaco-Vergasung.

Eine neue Entwicklung der Feststoff-Vergasung ist die Hochtemperatur-Winkler-Vergasung (s. z.B.: "Inbetriebnahme der HTW-Demonstrationsanlage", Kohleveredelung, 103, Heft. 3, März 1987, S. 140).

Weitere Kohle-Vergasungs-Entwicklungen sind beispielsweise beschrieben in "Energy Progress, Vol. 5, No. 4, Dec. 1985, page 234; "Chemical Week, July 15, 1987, page 36; "Chem. Ind.", XXXVII, Juni 1985, Seite 397.

Im Vergasungsverfahren, z.B. im Shell-Vergasungsverfahren werden Einsatzöl und Sauerstoff zunächst erhitzt. Das heiße Öl fließt durch ein Rohr, das am unteren Ende eine Zerstäubungsdüse besitzt. Diese Vorrichtung wird als Öllanze bezeichnet. Am Ausgang der Öllanze wird das zerstäubte Öl mit einem Gemisch von Sauerstoff bzw. Luft und Dampf gemischt, wobei entsprechend der Sauerstoffmenge ein Teil des Öls verbrennt und gleichzeitig die gewünschte endotherme Umsetzung des nicht verbrannten Öls mit Dampf zu CO und $H_2$ erfolgt.

Das Rohgas, welches $CO_2$ enthält und $H_2S$ enthalten kann, wird zunächst zur Erzeugung von Dampf höheren Drucks genützt und anschließend durch Quenchen mit Wasser gekühlt. $CO_2$ und $H_2S$ werden in Waschanlagen vom Synthesegas $CO/H_2$ abgetrennt.

In Abhängigkeit von der Viskosität des Einsatzöls treten nach einer gewissen Laufzeit an der Ausgangsdüse der Öllanze sowie an der Öllanze selbst Materialschäden, insbesondere Verzunderungen auf, die dazu führen, daß der Vergasungsreaktor abgestellt werden und daß die Öllanze gezogen werden muß und durch eine neue Öllanze mit neuer Zerstäubungsdüse ersetzt werden muß.

Die Laufzeit kann bei Einsatzölen hoher Viskosität weniger als 400 Stunden betragen, so daß die Wirtschaftlichkeit der Vergasung stark beeinträchtigt wird.

Die vorliegende Erfindung betrifft eine verbesserte Öllanze, die auch bei Einsatz hochviskoser, stark verschmutzter Einsatzöle wirtschaftlich zufriedenstellende Laufzeiten ermöglicht.

Sie ist dadurch gekennzeichnet, daß die die Düsenaustrittsöffnung(en) (2) bildende Fläche (6) der Zerstäubungsdüse (1) mindestens auf der gleichen Ebene oder erhöht angeordnet ist gegenüber dem äußeren Teil (7) der Zerstäubungsdüse (1).

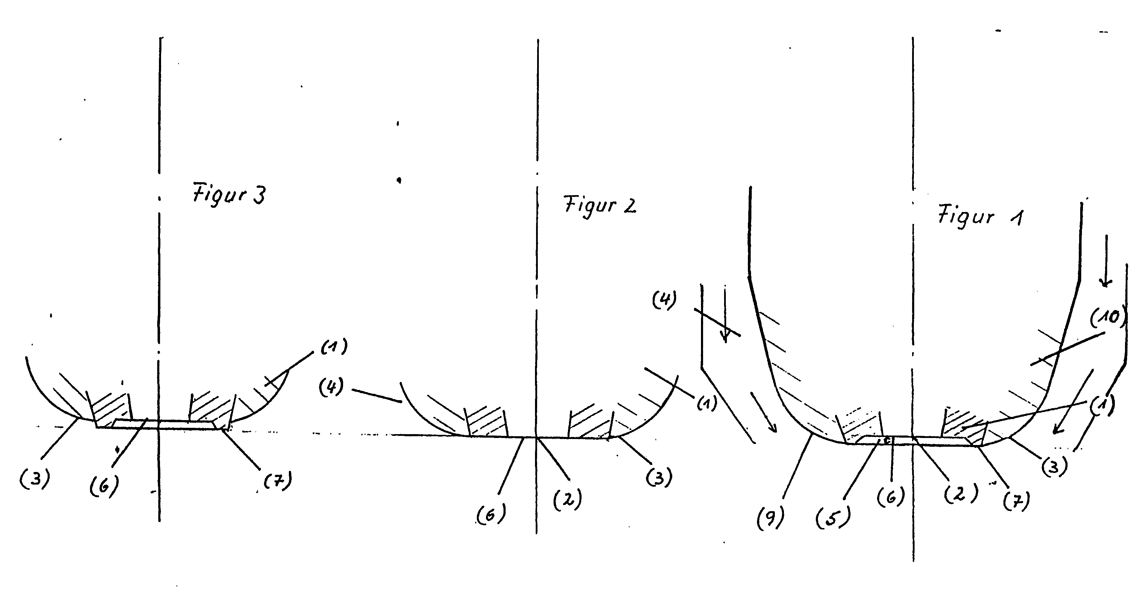

Figur 1 stellt den unteren Teil der Düse bzw Öllanze gemäß dem Stand der Technik dar. Die Figuren 2 bis 6 stellen erfindungsgemäße Ausführungen des unteren Teils der Düse bzw. Öllanze dar.

Bei der Düse nach dem Stand der Technik ist die Fläche, auf der sich der Düsenaustritt für das zu zerstäubende Öl befindet, gegenüber dem diese Fläche einschließenden Teil der Düse vertieft angeordnet, d.h. der untere Teil der Zerstäuberdüse (1) besitzt einen äußeren Teil (7), der gegenüber dem inneren Teil (11) erhöht ist, während der untere Teil der Öllanze (3) mit (7) eben abschließt.

Konventionelle Öllanzen sind üblicherweise aus Chrom/Nickel-Stählen hergestellt und besitzen eine Länge von 500 bis 1200 cm. Durch den Hohlraum der Öllanze, der üblicherweise einen Durchmesser von 20 - 100 mm besitzt, fließt das Öl nach unten zur in der Öllanze befestigten Zerstäuberdüse. Gewöhnlich besitzt die Düse unten eine zentrale Öffnung von 5 bis 30 mm Durchmesser.

Beim Durchfluß des Öls durch die Öllanze tritt eine Verwirbelung ein, so daß am Ausgang der Öffnung zerstäubtes Öl austritt.

In Abhängigkeit von der gewünschten Kapazität eines Vergasungsreaktors können die beschriebenen Öllanzen unterschiedliche Dimensionen besitzen.

Durch einen um die Öllanze angeordneten Hohlkörper fließt ein Gemisch von Wasserdampf und erhitztem Sauerstoff (erhitzter Luft). Am unteren Ende der Öllanze, wo Mischung von zerstäubtem Öl, Dampf und Sauerstoff erfolgt, verbrennt ein Teil des Öls, wodurch die zur endothermen Umsetzung des nicht verbranntem Öls mit dem Wasserdampf zu Synthesegas, erforderliche Energie erzeugt wird.

Öle mit einer Viskosität von 5 bis 20 cST vor der Öllanze können bei Verwendung der Öllanzen des Standes der Technik mit Laufzeiten von 2000 Stunden vergast werden.

Während des Betriebes der Öllanze treten nach und nach im Bereich des Düsenausgangs und des sie umschließenden Teils der Öllanze Materialschäden auf, insbesondere aufgrund von Verzunderung, wobei Materialdurchbrüche auftreten können. Die Öllanze muß daher gezogen werden und durch eine neue Öllanze mit neuer Düse ersetzt werden. Zum Austausch muß die Shell-Vergasungsanlage abgestellt werden, wobei der Öllanzenaustausch üblicherweise nur etwa 30 - 40 Minuten erfordert.

Der Öllanzenwechsel verursacht jedoch durch Produktionsausfall, Arbeitsaufwand, neues Material und Umweltbelastung erhebliche Kosten und Nachteile.

Mit steigender Viskosität des Einsatzöls nehmen die Materialschäden am Öllanzen- bzw. Düsenausgang stark zu. So kann sich beispielsweise die Lebenszeit einer Düse und einer Öllanze bei Einsatz eines Rückstandsöls mit einer Viskosität von > 20 cST vor der Öllanze auf etwa 400 Stunden verkürzen. Wirtschaftlichkeit und Sicherheit der Vergasung werden hierdurch sehr stark beeinträchtigt. Dieser bekannte Stand der Technik hat zur Konstruktion komplizierter Brenner anstelle der Öllanzen geführt, die zwar die Aufgabe lösen, hochviskose Öle unter Erreichen von 4 - 5000 Stunden zu vergasen. Diese Brenner haben jedoch den Nachteil, daß sie erheblich teurer sind als konventionelle Öllanzen mit Düsen, daß hohe Installierungskosten bei ursprünglich mit konventionellen Öllanzen ausgestatteten Ölvergasungsanlagen anfallen und daß bei einem Brennerwechsel die Shellvergasungsanlage für ca. 3 Tage abgestellt werden muß.

Die vorliegende Erfindung hat zu dem überraschenden Ergebnis geführt, daß durch die erfindungsgemäßen Änderungen am Düsenausgang bzw. dem die Düse umschließenden Öllanzenteil, erheblich verbesserte Laufzeiten, nämlich von 3000 - 4000 Stunden, auch bei hochviskosen Einsatzölen erreicht werden können.

Ferner können, ohne daß die Position der Öllanze im Reaktor geändert werden muß, Einsatzöle mit stark wechselnden Viskositäten von 5 - 100 cST vor der Öllanze ohne Materialschäden für Laufzeiten von ca. 3000 - 4000 Stunden eingesetzt werden.

Das wichtigste Merkmal der Erfindung ist, daß die die Düsenaustrittsöffnung (2) bildende Fläche (6) der Zerstäubungsdüse (1) mindestens auf der gleichen Ebene oder erhöht angeordnet ist gegenüber dem äußeren Teil (7) der Zerstäubungsdüse (1). Üblicherweise besitzt die Düse eine zentral angeordnete Öffnung, durch die das umzusetzende Öl ausströmt. Grundsätzlich können jedoch auch mehrere Öffnungen vorliegen, die beispielsweise kreisförmig auf der ausgangsseitigen Fläche der Düse angeordnet sind.

An den Figuren soll die Erfindung näher erläutert werden.

Figur 1 stellt den unteren Teil einer Öllanze nach dem Stand der Technik dar.
(1) ist der untere Teil der in das Öllanzenrohr eingesetzten Düse. Bei (2) befindet sich die Öffnung, durch welche das zu zerstäubende Einsatzöl ausströmt. (3) ist der die Düse umschließende untere Teil der Öllanze. (Um die Öllanze fließt bei (4) ein Gemisch vom Dampf und Sauerstoff bzw. Luft). (5) ist der Abstand, um welche die die Düsenöffnung enthaltende Fläche (6) gegenüber dem äußeren Teil der Düse (7) (Teil von (1)) tiefer liegt. Der Abstand zwischen (6) und (7) beträgt ca. 2 mm. (9) stellt die Außenwand der Öllanze dar. (10) stellt den Öllanzenkörper dar.

Figur 2 stellt eine bevorzugte Ausführung des unteren Teils der erfindungsgemäß verbesserten Öllanze dar.
Die die Öffnung enthaltende Fläche (6) entspricht in diesem Fall der Öffnung (2). Die diese umfassende Düse schließt eben mit dem die Düse umschließenden Teil (3) ab.
Bei (4) strömt entsprechend Figur 1 ein Gemisch von Dampf und Sauerstoff (Luft) zum unteren Teil der Öllanze.

Eine weitere Ausbildung der Erfindung stellt Figur 3 dar.
Hier ist der äußere Teil (7) der Zerstäuberdüse gegenüber dem unteren Teil der Öllanze (3) erhöht. Der Abstand kann > 0 -10 mm betragen. Im Unterschied zur Darstellung in Figur 3 können der Winkel, der zwischen (3) und (7) gebildet wird, bzw. die äußere Kante von (7) auch abgerundet sein. Die Fläche (6) ist gegenüber der Umrandung (7) vertieft. Die Vertiefung kann > 0 - 5 mm betragen.

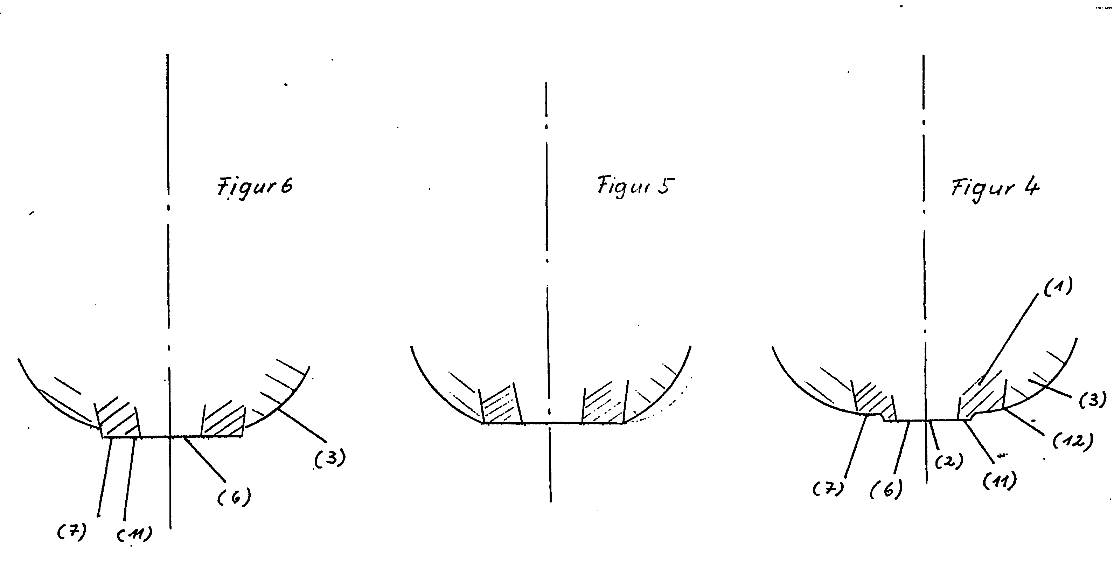

Figur 4 stellt eine weitere bevorzugte Ausführung der vorliegenden Erfindung dar.
Die Fläche (6) bzw. (2) schließt mit dem inneren Teil (11) der Düse eben ab, während der äußere Teil der Düse (7) zurückweicht und bei (12) in (13) übergeht. Der Abstand zwischen (11) und (12) beträgt > 0 bis 20 mm. Bei einer weiteren erfindungsgemäßen Ausgestaltung kann der untere Öllanzenteil (3) gegenüber (12) bzw. (7) zurückweichen.

Figur 5 entspricht Figur (2), jedoch ist der Öllanzenkörper schlanker als in Figur (2). Die schlankere Anordnung ist bevorzugt.

Bei der erfindungsgemäßen, ebenfalls bevorzugten Ausführungsform gemäß Figur 6 bilden (6), (7) und (11) eine Ebene und sind gegenüber (3) um > 0 bis 20 mm erhöht.

Erfindungsgemäß bevorzugt ist bei allen Ausbildungen eine schlankere Ausführung von (10) bzw. eine geringere Rundung bzw. Wölbung von (9) als in Figur (1).

Ferner können erfindungsgemäß Übergänge zwischen Figur 1 und den erfindungsgemäßen Ausführungen bestehen. So treten bereits eine Erhöhung der Lebensdauer der Düse und der Öllanze auf, wenn der Abstand (5) zwischen (6) und (7) geringer ist als in der Ausführung gemäß Figur (1).

Die in den Figuren (2) - (6) dargestellten Ausführungen sind vorteilhaft, jedoch nicht als limitierend anzusehen, z.B.: können Winkel und Abstände, sowie Kanten von den in den Figuren dargestellten, abweichen.

Die Aufteilung des unteren Teils der Zerstäuberdüse (1) in (11) und (7) kann in weiten Grenzen variieren. So kann (11) gegenüber (7) schmal sein und umgekehrt. Auch ein aus mehreren Stufen bestehender oder gleitender Übergang zwischen (7) und (11) bzw. mehreren Stufen oder eine abgeschrägte Fläche ist erfindungsgemäß vorteilhaft. Analoges gilt für den Übergang von der Düse zum unteren Teil der Öllanze (3).

Beispiele

Beispiel 1

In einem Vergasungsreaktor, ausgestattet mit einer Öllanze gemäß Figur 5 wurden 8,6 t/h eines Einsatzöls vergast. Die Dampfmenge betrug 5,6 t/h, die Sauerstoffmenge 6800 m³ /h. Das zerstäubte Öl trat an einer zentralen Öffnung (2) aus. Die Viskositäten der eingesetzten Öle betrugen 5 - 100 cST an der Öllanze, wobei überwiegend Öle umgesetzt wurden im cST.-Bereich zwischen 50 und 100.
Die Reaktortemperatur betrug ca. 1380 °C, der Reaktordruck 38 bar. Die Länge der Öllanze betrug 750 mm, der Durchmesser des inneren Rohrs 50 mm. Die Öffnung der Düse (2) hatte einen Durchmesser von 14 mm. Nach 3000 Stunden wurde die Öllanze gezogen und an dem unteren Teil derselben eine sorgfältige Materialprüfung vorgenommen. Es konnten keinerlei Schäden an Düse und Öllanze festgestellt werden.

Beispiel 2

Beispiel 1 wurde wiederholt, jedoch wurden 4,2 t/h an Einsatzöl durchgesetzt.
Die Länge der Öllanze betrug 650 mm, der Durchmesser der inneren Rohrs 40 mm. Die Düsenöffnung (2) hatte einen Durchmesser von 12 mm. Nach 3000 Stunden Betriebsdauer waren keine Materialschäden an Düse und Öllanze festzustellen.

Beispiel 3

Beispiel 1 wurde wiederholt. Als Öllanze wurde eine Konstruktion gemäß Figur 4 eingesetzt.
Nach 4000 Stunden Laufzeit wurden die Düse und Öllanze untersucht. Es wurden keinerlei Schäden festgestellt.

Beispiel 4

Beispiel 3 wurde wiederholt, jedoch ein Öl von 85 cST an der Öllanze eingesetzt.
Nach 4000 Stunden Laufzeit wurden keinerlei Schäden an Düse und Öllanze festgestellt.

Beispiel 5

Beispiel 1 wurde wiederholt. Als Öllanze wurde eine Konstruktion gemäß Figur 6 eingesetzt.
Nach 4000 Stunden Laufzeit wurden keinerlei Schäden an Düse und Öllanze festgestellt.

Vergleichsbeispiel 6

Die Beispiele 1 und 2 wurden mit einer Öllanzenausführung gemäß Figur 1 wiederholt. Nach 400 Stunden waren Düse und Öllanze so stark verzundert und durchlöchert, daß ein Austausch der Öllanze erforderlich war.

**Ansprüche**

1. Verbesserte Öllanze für Vergasungsreaktoren, dadurch gekennzeichnet, daß die die Düsenaustrittsöffnung(en) (2) bildende Fläche (6) der Zerstäubungsdüse (1) mindestens auf der gleichen Ebene oder erhöht angeordnet ist gegenüber den äußeren Teil (7) der Zerstäubungsdüse (1).

2. Verbesserte Öllanze nach Anspruch 1, dadurch gekennzeichnet, daß der innere Teil (11) der Zerstäuberdüse gegenüber dem äußeren Teil (7) erhöht ist.

3. Verbesserte Öllanze nach den Ansprüchen 1 und 2, dadurch gekennzeichnet, daß der äußere Teil (7) der Zerstäuberdüse mit dem unteren Öllanzenteil (3) auf gleicher Ebene abschließt.

4. Verbesserte Öllanze nach den Ansprüchen 1 - 3, dadurch gekennzeichnet, daß der äußere Teil (7) der Zerstäuberdüse gegenüber dem unteren Öllanzenteil (3) erhöht ist.

5. Verbesserte Öllanze, dadurch gekennzeichnet, daß der äußere Teil (7) der Zerstäuberdüse gegenüber dem inneren Teil (11) erhöht ist und daß der äußere Teil (7) gegenüber den unteren Teil der Öllanze (3) erhöht ist.

6. Verfahren zur Ölvergasung, dadurch gekennzeichnet, daß die Ölvergasung mit Öllanzen gemäß den Ansprüchen 1 - 5 durchgeführt wird.

7. Verfahren nach Anspruch 6, dadurch gekennzeichnet, daß Einsatzöle mit wechselnden Viskositäten von > 5 - 100 cST vor der Öllanze, ohne Änderung der Öllanzenposition (retraction) im Reaktor durchgesetzt werden.

8. Verwendung der Öllanzen nach den Ansprüchen 1 - 5 in Shellölvergasungsreaktoren.

Figur 3

(1)

(3) (6) (7)

Figur 2

(4) (1)

(6) (2) (3)

Figur 1

(4) (10) (1)

(9) (5) (6) (2) (7) (3)

EP 0 318 809 A1

Figur 4

Figur 5

Figur 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 291 835 (S. KAUFMAN)<br>* Figur 1; Spalte 3, Zeilen 30-36 *<br>--- | 1 | C 01 B 3/34<br>F 23 D 11/38 |
| A | DE-A-3 604 304 (RUHR OEL GmbH)<br>* Insgesamt *<br>--- | 1 | |
| A | US-A-3 771 728 (F.F. POLNAUER)<br>* Figuren 10-16 *<br>----- | 1 | |

RECHERCHIERTE
SACHGEBIETE (Int. Cl.4)

C 01 B
F 23 D

Der vorliegende Recherchenbericht wurde für alle Patentansprüche erstellt

| Recherchenort | Abschlußdatum der Recherche | Prüfer |
|---|---|---|
| DEN HAAG | 17-01-1989 | MINI A.E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
    Dokument